**Europäisches Patentamt**

**European Patent Office**

**Office européen des brevets**

(11) Veröffentlichungsnummer: **0 335 090 B1**

(12) **EUROPÄISCHE PATENTSCHRIFT**

(45) Veröffentlichungstag der Patentschrift: **11.08.93**

(21) Anmeldenummer: **89102472.1**

(22) Anmeldetag: **14.02.89**

(51) Int. Cl.⁵: **F16K 5/10**, F16K 5/04

(54) Regelorgan zur Einstellung von Flüssigkeitsströmen.

(30) Priorität: **30.03.88 DE 3810731**

(43) Veröffentlichungstag der Anmeldung:
**04.10.89 Patentblatt 89/40**

(45) Bekanntmachung des Hinweises auf die
Patenterteilung:
**11.08.93 Patentblatt 93/32**

(84) Benannte Vertragsstaaten:
**AT BE CH ES FR GB GR IT LI NL SE**

(56) Entgegenhaltungen:
**GB-A- 2 122 309**
**US-A- 1 844 046**

(73) Patentinhaber: **Total Walther Feuerschutz GmbH**
**Waltherstrasse 51**
**W-5000 Köln 80(DE)**

(72) Erfinder: **Lansche, Reinhard, Dipl.-Ing.**
**Huberweg 4**
**W-6905 Schriesheim(DE)**

**Beschreibung**

Die Erfindung betrifft ein Regelorgan, das ein Regelgehäuse aufweist, mit einer zylindrischen Innenwand und in Bezug auf die Mittelachse (14) des Regelgehäuses (2) seitlich versetzten, fensterartigen Fluidein- und - auslaßöffnungen, wobei ein mittels eines nach außen geführten Zylinderzapfens radial beweglicher Regelzylinder mit einem Fluiddurchlaßkanal an der Innenwand anliegt und gegen Atmosphäre abgedichtet ist.

In der Fluidtechnik werden als Regelorgane zur Einstellung von Flüssigkeitsströmen Kugelhähne, Klappenschieber oder Ventile verwendet, die den Nachteil haben, daß eine Regelung nur in einem Bereich von ca. 90° möglich ist, wobei die effektive Nutzung meist sogar nur bei 60° liegt, da der untere und der obere Abschnitt zu flach verlaufen.

Es sind auch Regelventile und Schieber bekannt, die eine für eine Regelung günstigere Kennlinie haben, jedoch sind hierbei die Stellzeiten zum Durchfahren des Bereiches für eine schnellreagierende Regelung zu lang, was teilweise auch auf die Massenträgheit zurückzuführen ist.

Bei einem bekannten Regelventil (DE-OS 27 49 431) wird der Fluiddurchlaß mit einem Ventilglied geregelt, bei dem die Querschnitte von Fluideinlaß- und -auslaß des Ventilgehäuses gleich dem Querschnitt des Fluiddurchlasses des Ventilgliedes sind. Eine Feinregelung der Flüssigkeitsströme ist mit diesem Ventil nicht zu erreichen.

Desweiteren ist eine Abfüllvorrichtung mit einem Verteiler bekannt (GB 2122309 A), bei dem eine Anzahl von Ventilen mit fensterartigen Ein- und Auslaßöffnungen vorgesehen sind Mit dieser Einrichtung sollen Verstopfungen durch größere Partikel vermieden werden, die in der abzurfüllenden Masse enthalten sind. Eine Feinregelung ist mit diesen Ventilen nicht möglich.

Der Erfindung liegt die Aufgabe zugrunde ein Regelorgan zu schaffen, mit dem kleine und große Fluidmengen genau und schnell eingeregelt werden können, wobei dem Regelorgan zunächst eine flache und dann eine in einen Linearbereich einlaufende Kennlinie zugrunde liegt.

Diese Aufgabe wird dadurch gelöst, daß der Fluiddurchlaßkanal im Regelzylinder zwei Kanalteile aufweist, die so ausgewählt sind, daß sich bei einer Drehung des Regelzylinders (6) ein erstes Teil des Fensters stetig öffnet und ab einem festlegbaren Punkt sich das zweite restliche Teil des Fensters ebenfalls zu öffnen beginnt, wobei das erste Teil bei Erreichen seiner maximalen Fläche offenbleibt so daß sich die offenen Flächen des ersten und zweiten Teils zu dem Gesamtquerschnitt addieren.

Eine besondere Ausgestaltung der Kanalteile ist darin zu sehen, daß der eine Kanalteil über die gesamte Höhe der Fluidein- und -auslaßfenster im Querschnitt einen Halbkreis bildet und der zweite Kanalteil mit über einen Teil der Fensterhöhe in der anderen Halbkreisfläche des Regelzylinders im Querschnitt einen Kreisausschnitt bildet.

Anstelle der Halbkreisform bzw. Kreisausschnittform können die beiden Kanalteile auch sichelförmig od. dgl. ausgebildet sein. Auch können die Aussparungen im Zylinder derart ausgebildet sein, daß sie kreisrunden Fensteröffnungen zugeordnet werden können.

Mit diesem Regelorgan wird in Abhängigkeit des Drehwinkels des Regelzylinders zunächst ein Fluiddurchlaß in Verbindung mit den Fluidein- und -auslaßfenstern des Regelgehäuses mit stetig zunehmenden Regelquerschnitt gebildet und ab einer bestimmten Winkelstellung des Regelzylinders ein Regelquerschnitt gebildet, der zusammen mit dem ersten Querschnitt sich zu einem Gesamtregelquerschnitt addiert. Folglich kann ein variabler Regelquerschnitt eingestellt werden. Die beiden Kanalteile sind so gewählt, daß sich bei einer Drehung des Regelzylinders das halbe Fenster stetig öffnet und ab einem festlegbaren Punkt sich die zweite Hälfte des Fensters ebenfalls zu öffnen beginnt, wobei die erste Hälfte bei Erreichen der maximalen Fläche offenbleibt, so daß sich die offenen Flächen der ersten und zweiten Hälfte zu einem Gesamtquerschnitt addieren.

Somit wird je nach Konstruktionsauslegung des Regelorganes ein Regelbereich über einen Winkel von ca. 150° möglich, wodurch wiederum eine sehr feine Einstellung gegeben ist.

Die sich aufgrund der erfindungsgemäßen Maßnahme ergebende Regelkennlinie nimmt einen sehr flachen Verlauf, so daß auch kleine Mengen genau dosiert werden können. Die Regelkennlinie geht dann in eine Gerade mit konstantem Anstieg über. Sollte im Verlauf der Kennlinie eine Anstiegsänderung für das entsprechende Regelproblem vorteilhaft sein, kann dies durch ein anderes Aufteilungsverhältnis der Fluidein- und -auslaßfenster zu den Fluiddurchlaßkanälen sehr einfach erreicht werden.

Weiterausbildungen sind in den Unteransprüchen gekennzeichnet.

Ein Ausführungsbeispiel ist in der Zeichnung dargestellt und wird nachfolgend näher beschrieben und dabei insbesondere auf die Wirkung der Erfindung näher eingegangen.

Es zeigt:

Fig. 1          eine Seitenansicht des Regelorganes,

2

Fig. 2          einen Schnitt gemäß Linie A-B in Fig. 1,

Fig. 3          eine räumliche Darstellung des Regelzylinders,

Fig. 4          eine Ansicht des Regelzylinders,

Fig. 5          einen Schnitt gemäß Linie C-D in Fig. 4,

Fig. 6          einen Schnitt gemäß Linie E-F in Fig. 4,

Fig. 7          einen Schnitt gemäß Linie G-H in Fig. 4,

Fig. 8 bis 10   unterschiedliche Stellungen des Regelzylinders im Gehäuse des Regelorganes mit Ansichten auf das Fluideinlaßfenster gemäß Fig. 8a bis 10a,

Fig. 11         eine Berechnungsskizze,

Fig. 12         eine Darstellung der Regelkennlinien.

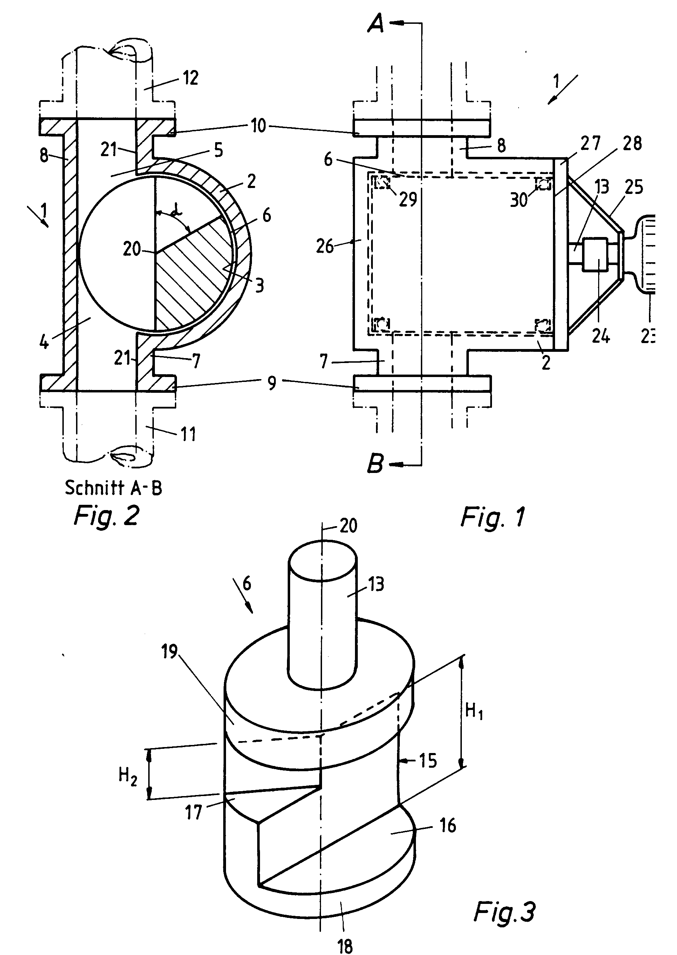

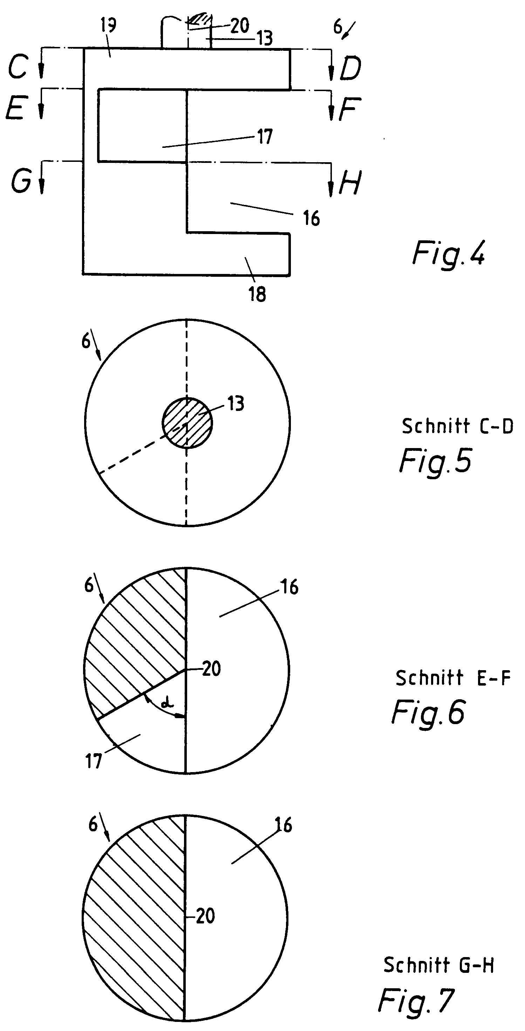

Das Regelorgan 1 besteht aus einem Gehäuse 2 mit zylindrischer Innenwand 3, wobei ein Boden 26 das Gehäuse nach unten und ein Deckel 27 das Gehäuse nach oben abschließt. Eine Dichtung 28 sorgt für einen dichten Abschluß zwischen Gehäuse 2 und Deckel 27. Im Ausführungsbeispiel ist das Gehäuse 2 mittels einer zylindrischen Gehäusewand dargestellt. Es gehört zum Wesen der Erfindung die Außenkonturen des Gehäuses 2 auch eckig darzustellen. Im Ausführungsbeispiel ist in der zylindrischen Wand des Gehäuses 2 seitlich zur Mittellinie versetzt, jeweils gegenüberliegend, ein Fluideinlaßfenster 4 und ein Fluidauslaßfenster 5 vorgesehen. An die Fenster 4 und 5 schließen sich Stutzen 7 und 8 an, die über Flansche 9 und 10 an Rohrleitungen 11 und 12 anschließbar sind. Innerhalb des Gehäuses 2 ist ein drehbeweglicher Regelzylinder 6 eingelassen, der einen Zylinderzapfen 13 aufweist, der durch eine nicht dargestellte Bohrung des Gehäusedeckels 27 nach außen geführt ist. Der Regelzylinder 6 ist mit einem Fluiddurchlaßkanal 15 versehen, der im Ausführungsbeispiel zweigeteilt ist. Über eine Höhe $H_1$ ist ein halbkreisförmiger Kanalteil 16 ausgenommen. In der anderen Hälfte des Regelzylinders ist ein Kanalteil 17 mit der Höhe $H_2$ als Kreisausschnitt ausgenommen. Damit verbleiben eine untere und obere Zylinderscheibe 18 bzw. 19. Die Ausgestaltung des Regelzylinders ist in den Fig. 3 bis 7 verdeutlicht, wobei mit 20 die zentrale Achse des Regelzylinders 6 bezeichnet ist. Die Größe des kreisausschnittförmigen Kanalteiles 17 ist gemäß Fig. 6 mit $\alpha$ bezeichnet.

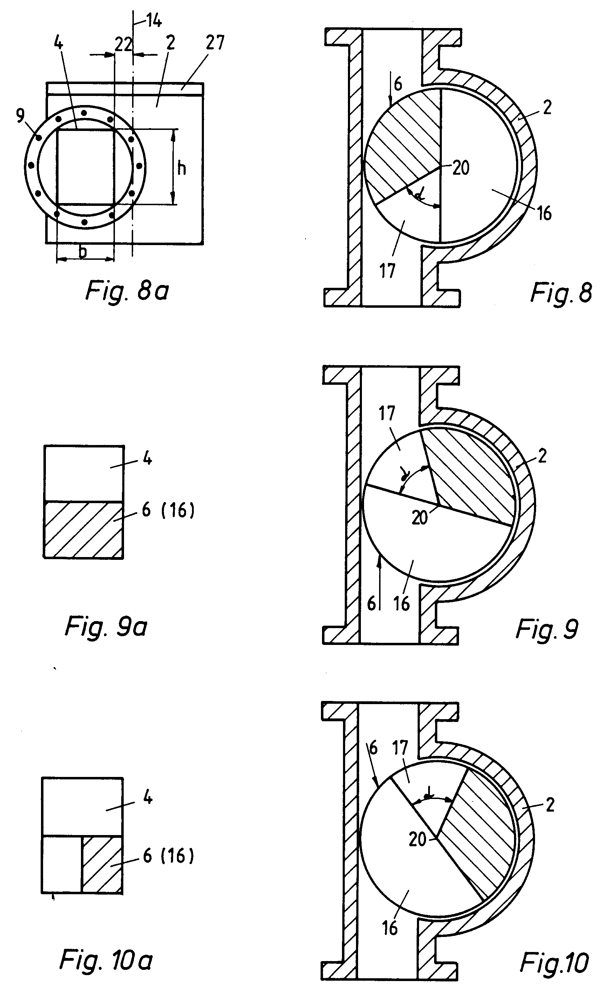

Die Fig. 8 bis 10 mit den Zusatzfiguren 8a bis 10a zeigen einige Stellungen des Regelzylinders 6 innerhalb des Gehäuses 2 des Regelorganes 1. In Fig. 8 ist der Regelzylinder so eingestellt, daß sich der Kanalteil 16 rechts neben der Achse 20 und der Kanalteil 17 unterhalb der Achse 20 befindet. Damit ist der Fluiddurchlaß vollständig geschlossen. Die Fig. 8a zeigt eine Ansicht von außen auf den Stutzen 7 des Gehäuses 2 mit dem Flansch 9 und die rechteckige Fensteröffnung 4. Der Übergang von der rechteckigen Fensterform auf die runde Flanschform ist nicht näher dargestellt. Hier sind unterschiedliche Ausführungsformen möglich. Fig. 9 zeigt eine Stellung des Regelzylinders 6, bei der die Fensteröffnung 4 halb geöffnet ist. Hier ist der Regelzylinder 6 so eingestellt, daß sich der Kanalteil 16 unterhalb der Achse 20 und der Kanalteil 17 links von der Achse 20 befindet. Fig. 9a zeigt das halbgeöffnete Fenster 4. Nach Fig. 10 ist der Regelzylinder so eingestellt, daß die obere Hälfte des Fensters 4 geöffnet und die untere Hälfte des Fensters 4 nur teilweise geschlossen ist. Wird der Regelzylinder 6 im Uhrzeigersinn gedreht, vergrößert sich die untere Hälfte der Fensteröffnung, wird der Regelzylinder jedoch entgegen dem Uhrzeigersinn gedreht, verkleinert sich die untere Hälfte der Fensteröffnung.

Das Regelorgan kann somit in jede beliebige Stellung zwischen 100 %-igem geschlossenem und 100 %-igem geöffneten Fluiddurchlaß 15 eingestellt werden. Wesentlich ist jedoch, daß die Innenwände 21 der Stutzen 7 und 8 und damit die innere Seitenfläche der Fenster 4 und 5 im Bereich der Gehäuseachse 14 liegen und dabei entweder mit der Achse 14 übereinstimmen oder um das Maß 22 versetzt sind. Dieser Versatz ist in der Praxis für eine ausreichende Abdichtung des Regelorganes vorteilhaft.

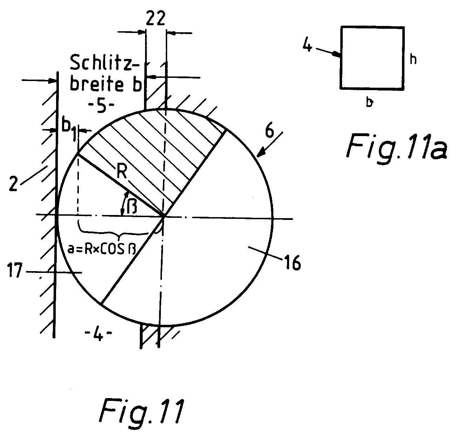

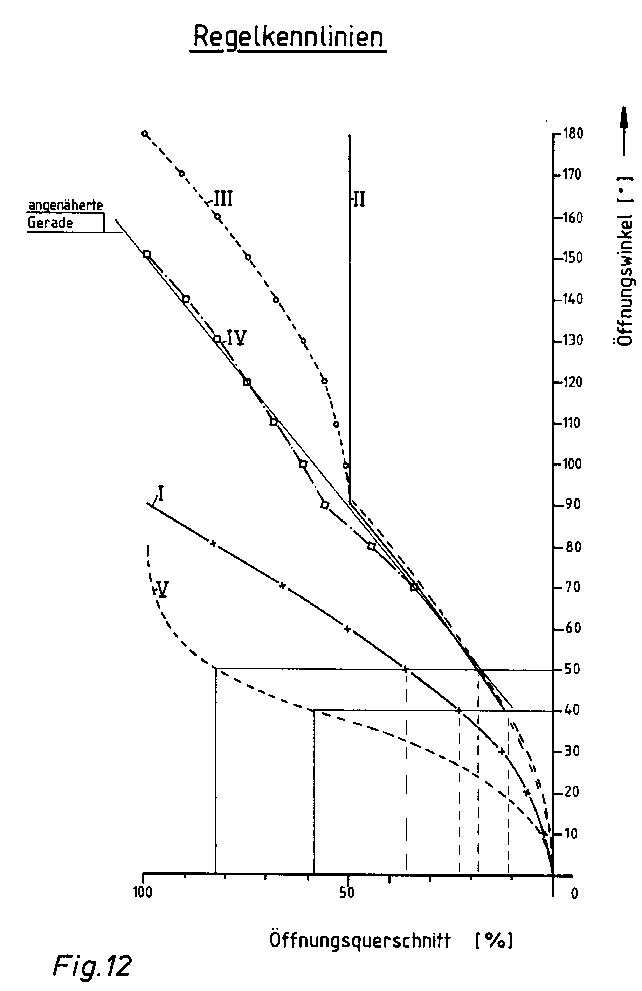

In Fig. 1 ist mit 23 ein Elektromotor und eine Kupplung 24 dargestellt, mit denen der Zapfen 13 und damit der Regelzylinder 6 verstellt werden können. Mit 25 ist die Befestigung des Motors 23 mit dem Gehäusedeckel 27 bezeichnet. In den Zylinderscheiben 18 und 19 des Regelzylinders 6 sind O-Ringe 29 und 30 eingelassen. Der im Ausführungsbeispiel dargestellte Deckel 27 mit der Dichtung 28 ist nicht zwingend notwendig. Es muß lediglich eine axiale Arretierung vorhanden sein. Die O-Ringe 29,30 sorgen dann für eine ausreichende Dichtung. Die Wirkung der Erfindung wird anhand der folgenden Ausführung dargelegt und dazu insbesondere auf die Fig. 11 und 12 verwiesen. Dabei zeigt Fig. 11 eine Ansicht bei der der Regelzylinder 6 gegenüber der Stellung in Fig. 9 entgegen dem Uhrzeigersinn verdreht ist und demzufolge in der oberen Hälfte der Fensteröffnung 5 nur der Spalt $b_1$ geöffnet ist. In Fig. 12 sind verschiedene Regelkennlinien I bis V dargestellt, wobei die Regelkennlinie V bei Regelorganen nach dem Stand der Technik erzielt werden und sich die Regellinie IV aufgrund des erfindungsgemäßen Regelorgans einstellt.

Der Erfindung liegen folgende Überlegungen zugrunde:

EP 0 335 090 B1

1. Der Durchfluß durch die Fenster 4 und 5 kann nach der Formel: $Q = A \alpha \sqrt{2 g H}$ berechnet werden.
Daraus folgt angenähert $Q \sim A$.
Bei einem Rechteckquerschnitt ist $A = b \times h$.
2. Die Spaltbreite $b_1$ gemäß Fig. 11 errechnet sich wie folgt:

$$b_1 = R (1-\cos\beta)$$

ist $R = const$

folgt $b_n \sim (1-\cos\beta_n)$

da $h = const$

folgt $A_n \sim (1-\cos\beta_n)$.

3. Betrachtet man nun (Fig. 11 und 12) z.B. 0-90°, so ergibt sich für den Regelquerschnitt der Fenster 4 und 5 die Kennlinie I.
Diese gilt dann, wenn die Höhe h der Fenster 4 und 5 im Gehäuse 2 gleich der Kanalhöhe $H_1$ im Regelzylinder 6 ist, und die Aussparung einen Halbkreis darstellt (Kanal 16).
4. Halbiert man die Kanalhöhe 16 im Regelzylinder 6 auf $\frac{H_1}{2}$ und die Kanalfläche auf einen 3/4-Kreis und behält die Fensterhöhe h im Gehäuse 2 bei, erhält man die Kennlinie II (bei 90° Drehwinkel ist der Querschnitt frei - 50% des Ausgangsquerschnittes - eine weitere Drehung bringt keine Querschnittserweiterung mehr).
5. Bringt man nun im Regelzylinder 6 eine zweite Aussparung (Kanal 17) mit einer Höhe von $H_2 = \frac{H_1}{2}$ an mit der Fläche eines Kreisausschnittes und legt diese so, daß der zweite Kanalquerschnitt zu öffnen beginnt, wenn der erste Querschnitt offen ist, so addiert sich bei einem Drehwinkel größer 90° der zweite zum ersten Querschnitt, so daß man die Kennlinie III erhält.
6. Die Kennlinie III hat nun bei 90° einen Sattel, der in der Regel unerwünscht ist.
Läßt man nun die Kanalaussparung 17 schon bei 70° öffnen, so beginnt auch die Querschnittsaddition schon bei 70°, und man erhält die Kennlinie IV und ab 40° in Näherung einen linearen Verlauf. Praktische Messungen haben dies bestätigt.
7. Vergleicht man nun die Kennlinien miteinander, so erkennt man sehr leicht, daß z.B. bei einer Winkeländerung von 10° (zwischen 40° und 50°) bei der

    Kennlinie V      eine Änderung des Querschnittes um 24%
    Kennlinie I       eine Änderung des Querschnittes um 13%
    Kennlinie IV     eine Änderung des Querschnittes um 7%

erfolgt.
Dadurch wird deutlich, daß mit Kennlinie I schon eine deutliche Verbesserung der Regelfeinheit, die beste jedoch mit Kennlinie IV erreicht wird.
8. Berücksichtigt man, daß die Regelung bei ca. 1,7% beginnen muß, wird deutlich, daß es im Interesse der Regelgenauigkeit von Vorteil ist, wenn in diesem Bereich die Kennlinie flacher verläuft.
9. Beispiel: 10% Querschnittsabweichung bei der Kennlinie IV

| Ist | Soll | Winkelkorrektur |
|------|------|-----------------|
| 90% | 100% | ca. 12° |
| 4,5% | 5% | ca. 3° |

Anmerkung

    Bei der oben durchgeführten theoretischen Betrachtung ist der Einfachheit halber davon ausgegangen, daß $b = R$ ist. Bei der praktischen Anwendung muß b jedoch kleiner als R sein, damit ausreichende Abdichtung gegeben ist.
    Der Kennlinienverlauf läßt sich durch Änderung der Verhältnisse b zu R, $H_1$ zu $H_2$, sowie durch Verschränkung der Kanäle 16 und 17 zueinander beeinflussen.

4

## EP 0 335 090 B1

Die Erfindung ist nicht an das dargestellte Ausführungsbeispiel gebunden, wie vorstehend an einigen Stellen schon hingewiesen wurde.

**Patentansprüche**

1. Regelorgan (1), das ein Regelgehäuse (2) aufweist, mit einer zylindrischen Innenwand und in Bezug auf die Mittelachse (14) des Regelgehäuses (2) seitlich versetzen, fensterartigen Fluidein- und -auslaßöffnungen (4,5), wobei ein mittels eines nach außen geführten Zylinderzapfens (13) radial beweglicher Regelzylinder (6) mit einem Fluiddurchlaßkanal (15) an der Innenwand anliegt und gegen Atmosphäre abgedichtet ist, dadurch gekennzeichnet, daß der Fluiddurchlaßkanal (15) im Regelzylinder (6) zwei Kanalteile (16,17) aufweist, die so ausgewählt sind, daß sich bei einer Drehung des Regelzylinders (6) ein erstes Teil des Fensters stetig öffnet und ab einem festlegbaren Punkt sich das zweite restliche Teil des Fensters ebenfalls zu öffnen beginnt, wobei das erste Teil bei Erreichen seiner maximalen Fläche offenbleibt, so daß sich die offenen Fläschen des ersten und des zweiten Teils zu dem Gesamtquerschnitt addieren.

2. Regelorgan nach Anspruch 1, dadurch gekennzeichnet, daß der eine Kanalteil (16) über die gesamte Höhe $H_1$ der Fluidein- und -auslaßfenster (4,5) im Querschnitt einen Halbkreis bildet und der zweite Kanalteil (17) nur über einen Teil der Fensterhöhe $H_2$ in der anderen Halbkreisfläche des Regelzylinders (6) im Querschnitt einen Kreisausschnitt bildet.

3. Regelorgan nach Anspruch 1, dadurch gekennzeichnet, daß die Fluideinlaß- (4) und -auslaßfenster (5) die geometrische Form eines Vieleckes haben.

4. Regelorgan nach den Ansprüchen 1 bis 3, dadurch gekennzeichnet, daß die der Mittelachse (14) des Regelgehäuses (2) am nächsten liegende Innenseite (21) der Fenster (4,5) so angeordnet ist, daß sie mit der Mittelachse (14) übereinstimmt oder geringfügig um ein Maß (22) daneben liegt.

5. Regelorgan nach den Ansprüchen 1 bis 4, dadurch gekennzeichnet, daß der kreisausschnittförmige Kanalteil (17) einen Zentrierwinkel ($\alpha$) zwischen 10° und 90° umschließt, vorzugsweise 60°.

6. Regelorgan nach einem der Ansprüche 2 bis 5, dadurch gekennzeichnet, daß die Höhen der Kanalteile (16,17) des Fluiddurchlaßes im Regelzylinder (6) ein Verhältnis von $H_1$ zu $H_2$ = 1 : 0,2 bis 1 : 0,8, vorzugsweise 1 : 0,5 aufweisen, wobei $H_1$ die Höhe des Kanalteiles (16) und $H_2$ die Höhe des Kanalteiles (17) ist.

7. Regelorgan nach einem der Ansprüche 1 bis 6, dadurch gekennzeichnet, daß die Fenster (4,5) in einem Stutzen (7,8) des Regelgehäuses (2) angeordnet sind.

8. Regelorgan nach Anspruch 7 mit Einbau in eine Rohrleitung, dadurch gekennzeichnet, daß die Stutzen (7,8) eine Form aufweisen, die von einer eckigen Form der Fluidein- und -auslaßöffnungen (4,5) in die runde Form der Rohrleitungen (11,12) übergeht.

9. Regelorgan nach den Ansprüchen 1 bis 8, dadurch gekennzeichnet, daß der Zylinderzapfen (13) des axialarretierten Regelzylinders (6) zur Einleitung des Verstell-Drehmomentes mit einem Antrieb (23) versehen ist.

10. Regelorgan nach Anspruch 9, dadurch gekennzeichnet, daR der Antrieb (23) motorisch, insbesondere elektrisch, pneumatisch oder hydraulisch erfolgt.

11. Regelorgan nach Anspruch 9, dadurch gekennzeichnet, daß der Antrieb des Regelzapfens (13) manuell erfolgt.

**Claims**

1. Control element (1), which comprises a control housing (2), with a cylindrical inner wall and window-like fluid inlet and outlet openings (1, 5) which are laterally offset in relation to the central axis (14) of the control housing (2), a control cylinder (6), which can be displaced radially by means of a cylinder

5

EP 0 335 090 B1

journal (13) guided towards the outside, resting against the inner wall and being sealed relative to the atmosphere, characterised in that the fluid flow duct (15) in the control cylinder (6) comprises two duct sections (16, 17), which are selected in such a manner that,when the control cylinder (6) is rotated, a first section of the window gradually opens and after a fixable point the second remaining section of the window also begins to open, the first section remaining open upon reaching its maximum surface area, so that the open surface areas of the first and second sections combine to form the overall cross sectional area.

2. Control element according to claim 1, characterised in that the first duct section (16) forms a semi-circle in cross section over the entire height $H_1$, of the fluid inlet and outlet windows (4, 5) and the second duct section (17) forms a circle segment in cross section over only part of the window height $H_2$ in the other semi-circular area of the control cylinder (6).

3. Control element according to claim 1, characterised in that the fluid inlet (4) and outlet windows (5) have the geometrical shape of a polygon.

4. Control element according to claims 1 to 3, characterised in that the inner side (21) of the windows (4, 5) lying closest to the central axis (14) of the control housing (2) is arranged in such a manner that it coincides with the central axis (14) or lies at a slight distance (22) therefrom.

5. Control element according to claims 1 to 4, characterised in that the circle segment-shaped duct section (17) encloses a centre angle ($\alpha$) of between 10° and 90°, preferably 60°.

6. Control element according to one of claims 2 to 5, characterised in that the heights of the duct sections (16, 17) of the fluid flow duct in the control cylinder (6) have a ratio of $H_1$ to $H_2$ = 1 : 0,2 to 0,8 preferably 1 : 0,5. $H_1$ being the height of the duct section (16) and $H_2$ the height of the duct section (17).

7. Control element according to one of claims 1 to 6, characterised in that the windows (4, 5) are arranged in a socket (7, 8) of the control housing (2).

8. Control element according to claim 7 fitted in a pipeline, characterised in that the sockets (7, 8) have a shape which changes from the square shape of the fluid inlet and outlet openings (4, 5) into the round shape of the pipelines (11, 12).

9. Control element according to claims 1 to 8, characterised in that the cylinder journal (13) of the axially locked control cylinder (6) is provided with a drive (23) for introducing the adjusting torque.

10. Control element according to claim 9, characterised in that the drive (23) is effected by a motor, more particularly electrically, pneumatically or hydraulically.

11. Control element according to claim 9, characterised in that the drive of the control journal (13) is effected manually.

**Revendications**

1. Organe de régulation (1) muni d'un boîtier de régulation (2), présentant une paroi interne cylindrique et des orifices (4, 5) d'admission et de sortie d'un fluide, du type fenêtres décalées latéralement par rapport à l'axe médian (14) du boîtier de régulation (2), un cylindre régulateur (6), percé d'un canal (15) de circulation du fluide et mobile radialement au moyen d'un tenon cylindrique (13) gagnant l'extérieur, étant appliqué contre la paroi interne et étant rendu étanche par rapport à l'atmosphère, caractérisé par le fait que le canal (15) de circulation du fluide comprend, dans le cylindre régulateur (6), deux parties de canal (16, 17) choisies de telle sorte que, lors d'une rotation du cylindre régulateur (6), une première partie de la fenêtre s'ouvre en permanence et que, à partir d'un point pouvant être fermement arrêté, la seconde partie restante de la fenêtre commence elle aussi à s'ouvrir, la première partie demeurant ouverte lorsque sa surface maximale est atteinte, de sorte que les surfaces ouvertes des première et seconde parties s'ajoutent à la section transversale totale.

6

**2.** Organe de régulation selon la revendication 1, caractérisé par le fait que l'une (16) des parties du canal forme, en coupe transversale, un demi-cercle sur la hauteur totale $H_1$ des fenêtres (4, 5) d'admission et de sortie du fluide, et la seconde partie (17) du canal forme en coupe transversale un secteur circulaire, dans l'autre surface semi-circulaire du cylindre régulateur (6), uniquement sur une partie $H_2$ de la hauteur des fenêtres.

**3.** Organe de régulation selon la revendication 1, caractérisé par le fait que les fenêtres d'admission (4) du fluide et de sortie (5) du fluide présentent la configuration géométrique d'un polygone.

**4.** Organe de régulation selon les revendications 1 à 3, caractérisé par le fait que la face interne (21) des fenêtres (4, 5), occupant la position la plus proche de l'axe médian (14) du boîtier de régulation (2), est disposée de façon qu'elle coïncide avec l'axe médian (14) ou soit légèrement juxtaposée, d'une cote (22), à ce dernier.

**5.** Organe de régulation selon les revendications 1 à 4, caractérisé par le fait que la partie (17) du canal, revêtant la forme d'un secteur circulaire, décrit un angle de centrage ($\alpha$) compris entre 10° et 90°, et mesurant de préférence 60°.

**6.** Organe de régulation selon l'une des revendications 2 à 5, caractérisé par le fait que les hauteurs des parties de canal (16, 17) de la circulation du fluide, dans le cylindre régulateur (6), présentent un rapport de $H_1$ à $H_2$ = 1 : 0,2 à 1 : 0,8, de préférence 1 : 0,5, $H_1$ et $H_2$ désignant, respectivement, la hauteur de la partie (16) du canal et la hauteur de la partie (17) du canal.

**7.** Organe de régulation selon l'une des revendications 1 à 6, caractérisé par le fait que les fenêtres (4, 5) sont disposées dans un manchon (7, 8) du boîtier de régulation (2).

**8.** Organe de régulation selon la revendication 7, intégré dans un conduit tubulaire et caractérisé par le fait que les manchons (7, 8) présentent une configuration qui, à partir d'une forme anguleuse des orifices (4, 5) d'admission et de sortie du fluide, passe à la forme ronde des conduits tubulaires (11, 12).

**9.** Organe de régulation selon les revendications 1 à 8, caractérisé par le fait que le tenon cylindrique (13) du cylindre régulateur (6) arrêté axialement est pourvu d'un entraînement (23) en vue de l'application du couple de rotation de réglage.

**10.** Organe de régulation selon la revendication 9, caractérisé par le fait que l'entraînement (23) est assuré par voie motorisée, en particulier électriquement, pneumatiquement ou hydrauliquement.

**11.** Organe de régulation selon la revendication 9, caractérisé par le fait que l'entraînement du tenon de régulation (13) est assuré manuellement.

7

12

10

8

21

5

8

2

1

6

20

3

4

21

7

21

9

11

Schnitt A-B

*Fig. 2*

A

1

6

8

27

28

29

30

13

26

25

24

23

7

2

B

*Fig. 1*

20

6

13

19

H₁

17

15

H₂

16

18

*Fig.3*

8

**Fig.4**

Schnitt C-D
**Fig.5**

Schnitt E-F
**Fig.6**

Schnitt G-H
**Fig.7**

Fig. 8a

Fig. 8

Fig. 9a

Fig. 9

Fig. 10a

Fig.10

Fig.11a

Fig.11

EP 0 335 090 B1

## Regelkennlinien

Öffnungswinkel [ ° ]

180
170
160
150
140
130
120
110
100
90
80
70
60
50
40
30
20
10
0

II

III

IV

I

V

angenäherte
Gerade

Öffnungsquerschnitt [ % ]

50

100

12

*Fig.12*